# FASCICULE DE BREVET EUROPEEN

(11) **EP 2 838 170 B1**
(45) Date de publication et mention de la délivrance du brevet: **16.03.2016**
(21) Numéro de dépôt: 14180537.4
(22) Date de dépôt: 11.08.2014
(51) Int. Cl.: H02G 3/04, H02G 3/06, H02G 3/00

(54) **Chemin de câble comprenant une goulotte en treillis de fils soudés et un élément de fixation, et élément de fixation pour une telle goulotte**
Kabelkanal, der eine Rinne aus geschweißtem Drahtgeflecht und ein Befestigungselement umfasst, und Befestigungselement für eine solche Rinne
Raceway including a chute made of a lattice of soldered wires and an attachment element, and attachment element for such a chute

(30) Priorité: 12.08.2013 FR 1357950
(43) Date de publication de la demande: 18.02.2015
(73) Titulaire: Gewiss France SAS, 21430 Liernais (FR)
(72) Inventeur: Guenot, Franck, 21140 Millery (FR)
(74) Mandataire: Myon, Gérard Jean-Pierre

(56) Documents cités:
- FR-A1- 2 864 361
- FR-A1- 2 911 438
- FR-A1- 2 912 003

## Description

La présente invention concerne un élément de fixation d'une goulotte, ainsi qu'un chemin de câbles comportant un tel élément de fixation et au moins une goulotte.

Un chemin de câbles comprend généralement plusieurs goulottes mises bout à bout et assemblées au moyen d'éclisses. Une éclisse est par exemple décrite dans FR-A-2 864 361. Les goulottes peuvent être réalisées par pliage de flans de tôle ou par un treillis de fils soudés, le plus souvent métalliques.

Dans le cas d'une goulotte en treillis de fils soudés, on identifie généralement des fils de chaîne, qui sont rectilignes et parallèles à un axe longitudinal de la goulotte, et des fils de trame, qui sont perpendiculaires à cet axe et cintrés de façon à définir le fond et les côtés de la goulotte, en association avec les fils de chaîne.

Pour suspendre un chemin de câbles à un plafond, il est connu par exemple de FR-A-911 438 de fixer plusieurs tiges verticales à ce plafond et de munir ces tiges verticales de consoles rapportées, destinées à supporter les goulottes.

Ces consoles rapportées sont parfois constituées de deux pattes dénommées "crapauds", qui sont montées de part et d'autre du fond de la goulotte, et qui comportent chacune deux rainures de passage d'un fil de chaîne constitutif du fond de la goulotte. Un écrou et un contre écrou sont montés sur une tige filetée verticale et retiennent les deux plaques. Ce système ne permet pas de suspendre des goulottes de faible largeur dont le fond ne comporte qu'un seul fil de chaîne.

Pour remédier à cet inconvénient, il est connu d'utiliser un élément de suspension qui s'accroche à la fois aux deux bords supérieurs des côtés de la goulotte, ce qui permet de suspendre des goulottes de faible largeur. L'opérateur qui installe un tel chemin de câble doit faire passer les câbles entre la goulotte et cet élément de suspension, ce qui est long et peu commode.

On connait également des éléments de suspension comprenant une barrette plate de forme allongée destinée à être positionnée perpendiculairement à la direction longitudinale de la goulotte, en dessous du fond de la goulotte. Les extrémités de la barrette sont munies chacune d'une languette élastique prévue pour enserrer un fils de chaîne ou de trame du fond de la goulotte. Ces barrettes ne gênent pas le passage des câbles lors de l'installation du chemin de câbles, et sont adaptées à des chemins de câble en treillis de fils soudés dont le fond ne comporte qu'un seul fil de chaîne.

Lorsqu'une telle barrette est utilisée pour suspendre une goulotte dont le fond ne comporte qu'un seul fil de chaine, elle est montée parallèlement à l'axe longitudinal de la goulotte et les languettes coopèrent avec deux fils de trame consécutifs. Toutefois, l'assemblage est relativement instable car le maintien en position de chaque fil de trame est assuré par une seule languette.

L'invention propose un nouvel élément de fixation d'une goulotte pour chemin de câbles adapté pour fixer une goulotte dont le fond comporte qu'un seul fil de chaine, et assurant un assemblage rigide.

A cet effet, l'invention a pour objet un chemin de câbles comprenant au moins une goulotte en treillis de fils soudés et au moins un élément de fixation pour la goulotte, l'élément de fixation comportant une paroi s'étendant le long d'un axe longitudinal et au moins un trou de fixation. Conformément à l'invention, l'élément de fixation comporte deux premières languettes et deux deuxièmes languettes qui font saillie à partir de la paroi et qui délimitent chacune, avec la paroi, un espace de réception d'un fil de la goulotte.Les premières languettes d'une part, et les deuxièmes languettes d'autre part, sont alignées selon une direction perpendiculaire à l'axe longitudinal et l'élément de fixation comporte une rainure qui loge un unique fil de chaîne formant le fond de la goulotte, la rainure étant parallèle à l'axe longitudinal qui s'étend entre les premières languettes d'une part, et entre les deuxièmes languettes d'autre part. Une longueur des premières languettes est strictement supérieure à une longueur des deuxièmes languettes.

Grâce à l'invention, la rainure permet de loger l'unique fil de chaine constitutif du fond de la goulotte, ce qui autorise l'emploi de deux languettes à chaque extrémité de l'élément de fixation. Ainsi, la rigidité de l'assemblage est améliorée. De plus, l'élément de fixation est adapté pour fixer une goulotte au plafond, ou contre une surface verticale ou horizontale.

L'invention est avantageuse lorsque l'élément de fixation est associé à une goulotte dont le fond est formé par un unique fil de chaîne. Toutefois, l'élément de fixation permet également de fixer des goulottes dont le fond est formé d'un nombre de fils de chaîne supérieur ou égal à deux, en adaptant la distance entre les languettes à la distance entre les fils de chaîne et/ou entre les fils de trame de la goulotte.

Selon des aspects avantageux mais non obligatoires de l'invention, un tel élément de fixation peut incorporer une ou plusieurs des caractéristiques techniques suivantes, prises en toute combinaison techniquement admissible :
- Au moins un trou de fixation est taraudé.
- Les bords longitudinaux de l'élément de fixation sont recourbés en direction du fond de la rainure.
- L'élément de fixation comporte plusieurs trous de fixation répartis le long d'une direction parallèle à l'axe longitudinal.
- Une distance mesurée parallèlement à l'axe longitudinal, entre les premières languettes d'une part, et les deuxièmes languettes d'autre part, est sensiblement égale à une distance entre la fibre neutre de deux fils de trame consécutifs de la goulotte.
- Une longueur des premières languettes est strictement supérieure au double du diamètre des fils de la goulotte.
- Une largeur de l'élément de fixation, mesurée perpendiculairement à l'axe longitudinal, est sensiblement égale à une distance entre deux fils de chaine consécutifs de la goulotte.- Une distance mesurée parallèlement à l'axe longitudinal, entre les premières languettes d'une part, et les deuxièmes languettes d'autre part, est sensiblement égale à une distance entre les fibres neutres de deux fils de chaine de la goulotte séparés entre eux par un troisième fil de chaine.

L'invention concerne également un élément de fixation pour une goulotte de chemin de câbles en treillis de fils soudés dont le fond est formé par un unique fil de chaîne, l'élément de fixation comportant une paroi s'étendant le long d'un axe longitudinal et au moins un trou de fixation, caractérisé en ce que l'élément de fixation comporte deux premières languettes et deux deuxièmes languettes qui font saillie à partir de la paroi et qui délimitent chacune, avec la paroi, un espace de réception d'un fil de la goulotte. Les premières languettes d'une part, et les deuxièmes languettes d'autre part, sont alignées selon une direction perpendiculaire à l'axe longitudinal et l'élément de fixation comporte une rainure de logement du fil de chaîne du fond de la goulotte, la rainure étant parallèle à l'axe longitudinal qui s'étend entre les premières languettes d'une part, et entre les deuxièmes languettes d'autre part. Une longueur des premières languettes est strictement supérieure à une longueur des deuxièmes languettes.

L'invention sera mieux comprise et d'autres avantages de celle-ci apparaîtront plus clairement à la lumière de la description qui va suivre de chemins de câbles conformes à l'invention, donnée uniquement à titre d'exemple et faite en référence aux dessins annexés dans lesquels :
- la figure 1 est une vue en perspective d'une portion d'une première goulotte de chemin de câbles montée sur un premier système de suspension comprenant un élément de fixation conforme à un premier mode de réalisation de l'invention ;
- la figure 2 est une vue en perspective d'une portion d'une deuxième goulotte de chemin de câbles montée sur le système de suspension de la figure 1 ;
- la figure 3 est une vue en perspective de deux premières goulottes représentées partiellement et montées sur un deuxième système de suspension comprenant un élément de fixation conforme à un deuxième mode de réalisation de l'invention ;
- la figure 4 est une vue en perspective de deux deuxièmes goulottes représentées partiellement et montées sur le deuxième système de suspension ;
- la figure 5 est une vue en perspective d'une portion d'une troisième goulotte montée sur le deuxième système de suspension ;
- la figure 6 est une vue en perspective d'une portion d'une quatrième goulotte montée sur un troisième système de suspension comprenant le deuxième élément de fixation ;
- la figure 7 est une vue en perspective de deux premières goulottes représentées partiellement et fixées sur une surface horizontale au moyen du deuxième élément de fixation ;
- la figure 8 est une vue en perspective de la troisième goulotte représentée partiellement et fixée sur une surface horizontale au moyen du deuxième élément de fixation ;
- la figure 9 est une vue en perspective de deux premières goulottes représentées partiellement et fixées sur une surface verticale au moyen du deuxième élément de fixation ;
- la figure 10 est une vue en perspective d'une portion de la première goulottes fixée à deux boitiers de dérivation au moyen de deux deuxièmes éléments de fixation ;
- la figure 11 est une vue en perspective de l'élément de fixation conforme au premier mode de réalisation ; et
- la figure 12 est une vue en perspective de l'élément de fixation conforme au deuxième mode de réalisation.

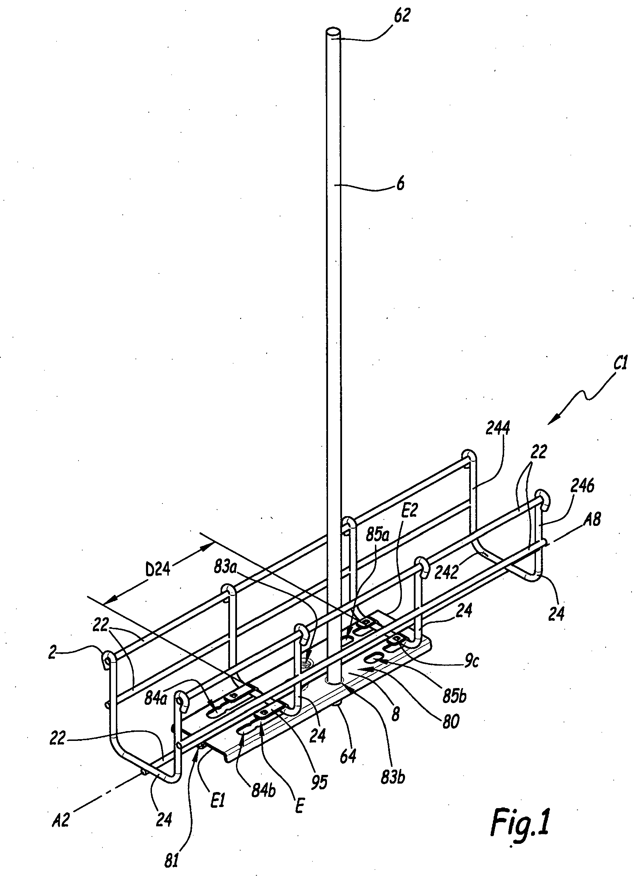

Un chemin de câbles C1 est partiellement représenté à la figure 1. Il comprend une goulotte 2 réalisée par soudage de fils métalliques, cette goulotte étant partiellement représentée sur les figures et s'étendant selon un axe longitudinal A2. La goulotte 2 est formée de fils de chaîne 22 et de fils de trame 24. Les fils de chaînes 22 sont rectilignes et parallèles à l'axe A2, alors que les fils de trame 24 sont perpendiculaires à cet axe et comprennent une partie centrale 242 et deux parties latérales 244 et 246. Les différentes parties centrales 242 des fils de trame 24 définissent avec les fils de chaînes 22 qui sont soudés sur ces parties, le fond de la goulotte 2, alors que les fils de chaînes 22 définissent avec les parties 244 et 246 des fils de trame, les côtés de la goulotte 2.

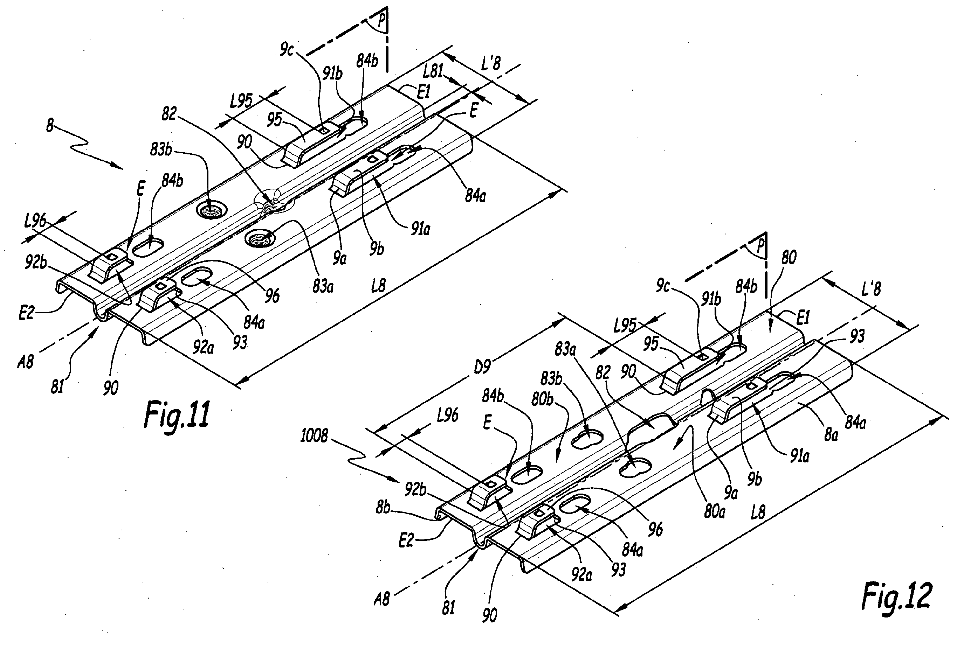

La goulotte 2 est montée sur un système de suspension qui comprend une tige filetée 6 et un élément de fixation 8 représenté séparément à la figure 11.

Une extrémité supérieure 62 de la tige 6 est prévue pour être fixée à un plafond non représenté, par exemple au moyen de chevilles à frapper.

Une extrémité inférieure 64 de la tige 6, opposée à l'extrémité supérieure 62, est pourvue d'un filetage extérieur prévu pour l'assemblage de la tige 6 avec l'élément de fixation 8.

L'élément de fixation 8 est globalement de forme rectangulaire et plane, et s'étend le long d'un axe longitudinal A8 éntre une première extrémité E1 et une deuxième extrémité E2.

La longueur L8 de l'élément de fixation 8, mesurée parallèlement à l'axe longitudinal A8 entre les extrémités E1 et E2, est comprise entre 140 et 170 mm, de préférence égale à 170 mm.

L'élément de fixation 8 comporte une rainure 81 longitudinale et médiane centrée sur l'axe longitudinal A8. La rainure 81 augmente la rigidité de l'élément de fixation 8. La rainure 81 est adaptée pour recevoir l'unique fil de chaine 22 constitutif du fond de la goulotte 2. La largeur L81 de la rainure 81, mesurée perpendiculairement à l'axe longitudinal A8, est légèrement supérieure au diamètre des fils 22 et 24 de la goulotte 2. De préférence, la largeur L81 de la rainure 81 est compris entre 4 et 5 mm, de préférence égale à 5 mm.

Les bords longitudinaux de l'élément de fixation 8 sont parallèles à l'axe longitudinal A8 et sont recourbés en direction du fond de la rainure 81. Ainsi, l'élément de fixation 8 présente une section transversale globalement en forme de U à fond plat, le fond comportant la rainure 81. L'élément de fixation 8 comporte ainsi une paroi dorsale 80 qui définit le fond du U, ainsi que deux parois latérales 8a et 8b globalement perpendiculaires à la paroi dorsale 80. La paroi dorsale 80 comporte deux parties longitudinales 80a et 80b séparées par la rainure 81.

La largeur L'8 de l'élément de fixation 8, mesurée perpendiculairement à l'axe longitudinal A8, est comprise entre 40 et 45 mm, de préférence égale à 45 mm.

L'élément de fixation 8 est symétrique par rapport à un plan médian longitudinal P passant par l'axe longitudinal A8 et perpendiculaire à la paroi dorsale 80.

Un premier trou 82 central taraudé coupe l'axe longitudinal A8 et est ménagé dans la rainure 81.

L'élément de fixation 8 comporte deux deuxièmes trous 83a et 83b taraudés ménagés respectivement dans la partie 80a et dans la partie 80b de la paroi dorsale 80.

Du côté de l'extrémité E1, l'élément de fixation 8 comporte deux premières lumières 91a et 91b ménagées chacune au niveau de l'une des parties 80a ou 80b de la paroi dorsale 80.

Du côté de l'extrémité E2, l'élément de fixation 8 comporte deux deuxièmes lumières 92a et 92b ménagées chacune au niveau de l'une des parties 80a ou 80b de la paroi dorsale 80.

Les lumières 91 a, 91 b, 92a et 92b sont de forme allongée et s'étendent parallèlement à l'axe longitudinal A8.

Un premier bord 90 de chaque première lumière 91 a et 91 b, situé du côté de la deuxième extrémité E2 de l'élément de fixation 8 le long de l'axe A8, est équipé d'une première languette 95 qui fait saillie au dessus de la paroi dorsale 80. Les premières languettes 95 sont alignées selon une direction perpendiculaire à l'axe longitudinal A8.

Le premier bord 90 de chaque deuxième lumière 92a et 92b est équipé d'une deuxième languette 96 qui fait saillie au dessus de la paroi dorsale 80. Les deuxièmes languettes 96 sont alignées selon une direction perpendiculaire à l'axe longitudinal A8.

Chaque languette 95 et 96 est de forme coudée et comporte une première partie 9a qui prolonge le premier bord 90 de l'une des lumières 91 a, 91 b, 92a et 92b, et une deuxième partie 9b qui prolonge la première partie 9a et qui s'étend au dessus de la lumière 91 a, 91b, 92a ou 92b correspondante, parallèlement à la paroi dorsale 80. L'extrémité libre de chaque languette 95 et 96 est dirigée, le long de l'axe longitudinal A8, vers la première extrémité E1 de l'élément de fixation 8.

Chaque languette 95 et 96 comporte un ergot 9c anti-retour qui fait saillie à partir de la deuxième partie 9b de la languette 95 en direction de la paroi dorsale 80.

Une longueur L95, mesurée le long de la deuxième partie 9b de chaque première languette 95, parallèlement à l'axe longitudinal A8, entre la première partie 9a et l'ergot 9c de la première languette 95, est strictement supérieure à une longueur L96, mesurée le long de la deuxième partie 9b de chaque deuxième languette 96, parallèlement à l'axe longitudinal A8, entre la première partie 9a et l'ergot 9c de la deuxième languette 96.

La longueur L96 est strictement supérieure au diamètre des fils 22 et 24 de la goulotte 2.

La longueur L95 est strictement supérieure au double du diamètre des fils 22 et 24 de la goulotte 2.

Les lumières 91 a, 91b, 92a et 92b et les languettes 95 et 96 sont formées par découpage et pliage d'un flan de tôle ou de plastique, de sorte que la somme des longueurs des parties 9a et 9b des languettes 95 est sensiblement égale à la longueur des lumières 91 a, 91 b, 92a et 92b.

Un espace libre E est délimité entre la paroi dorsale 80 de l'élément de fixation 8 et chaque languette 95 et 96. Le fond de l'espace libre E est délimité par la première partie 9a de la languette 95 ou 96, le dessus de l'espace libre E est délimité par la deuxième partie 9b de la languette 95 ou 96, et le dessous de l'espace libre est délimité par la paroi dorsale 80. Les espaces libres E sont ouverts sur les côtés et en direction de la première extrémité E1 de l'élément de fixation 8.

Les ergots 9c permettent d'améliorer la stabilité de l'assemblage en empêchant les fils de chaine 22 ou de trame 24 de ressortir de leur logement, autrement dit de ressortir des espaces libres E.

On note D9, une distance mesurée parallèlement à l'axe longitudinal A8, entre la première partie 9a des premières languettes 95 et la première partie 9b des deuxièmes languettes 96.

La distance D9 est sensiblement égale à une distance D24 entre l'axe géométrique central, c'est à dire la fibre neutre, de la partie centrale 242 de deux fils de trame 24 consécutifs, mesurée parallèlement à l'axe longitudinal A2.

Un deuxième bord 93 de chaque première lumière 91 a et 91 b, situé du côté de la première extrémité E1 de l'élément de fixation 8, est attenant avec un troisième trou 84a ou 84b oblong qui prolonge la première lumière.

Deux quatrièmes trous 85a et 85b sont ménagés respectivement sur la partie 8a et sur la partie 8b de la paroi dorsale 80. Les quatrièmes trous 85a et 85b sont séparés d'une distance strictement supérieure à zéro de chaque deuxième lumière 92a et 92b.

Le long de l'axe longitudinal A8 et dans un sens allant de la première extrémité E1 vers la deuxième extrémité E2, l'élément de fixation 8 comporte successivement les troisièmes trous 84a et 84b, les premières lumières 91 a et 91 b et les premières languettes 95, le premier trou 82, les deuxièmes trous 83a et 83b, les quatrièmes trous 85a et 85b, et les deuxièmes lumières 92a et 92b et les deuxièmes languettes 96. Ainsi, les trous de fixation sont répartis le long de l'axe longitudinal A8. Les trous 82, 83a et 83b sont situés entre les premières languettes 95 et les deuxièmes languettes 96.

Dans l'exemple de la figure 1, le système de suspension est monté dans une configuration dans laquelle les axes longitudinaux A2 et A8 sont parallèles. L'élément de fixation 8 est positionné contre le fond de la goulotte 2, à l'extérieur du volume prévu pour recevoir les câbles.

Le filetage de la tige 6 coopère avec le deuxième trou 83b de l'élément de fixation 8, qui est taraudé. L'unique fil de chaine 22 qui forme le fond de la goulotte 2 est logé dans la rainure 81 de l'élément de fixation 8 et la paroi dorsale 80 est en appui contre la partie centrale 242 de deux fils de trame 24 successifs de la goulotte 2. Ces deux fils de trame 24 sont logés dans les espaces libres E délimités par les languettes 95 et 96 et viennent en butée contre les premières parties 9a des languettes 95 et 96.

Lors du montage du chemin de câbles C1, la tige 6 est accrochée à un plafond. Puis, l'élément de fixation 8 est monté sur la tige 6. Un opérateur visse la tige 6 dans l'un des deuxièmes trous et 84, qui sont taraudés.

Ensuite, l'opérateur amène le fond de la goulotte 2 contre la paroi dorsale 80 de l'élément de fixation 8 et fait glisser la goulotte 2 parallèlement à l'axe A8, afin de positionner les parties centrales 242 des fils de trame 24 dans les espaces E.

La rainure 81 permet de réaliser un assemblage relativement rigide de goulottes 2 dont le fond ne comporte qu'un seul fil de chaine 22. Chaque extrémité E1 et E2 de l'élément de fixation 8 comporte deux languettes 95 ou 96 situées de part et d'autres de la rainure 81. Grâce à la rainure 81, le fil de chaine 22 constitutif du fond de la goulotte 2 ne gêne pas l'assemblage de l'élément de fixation 8.

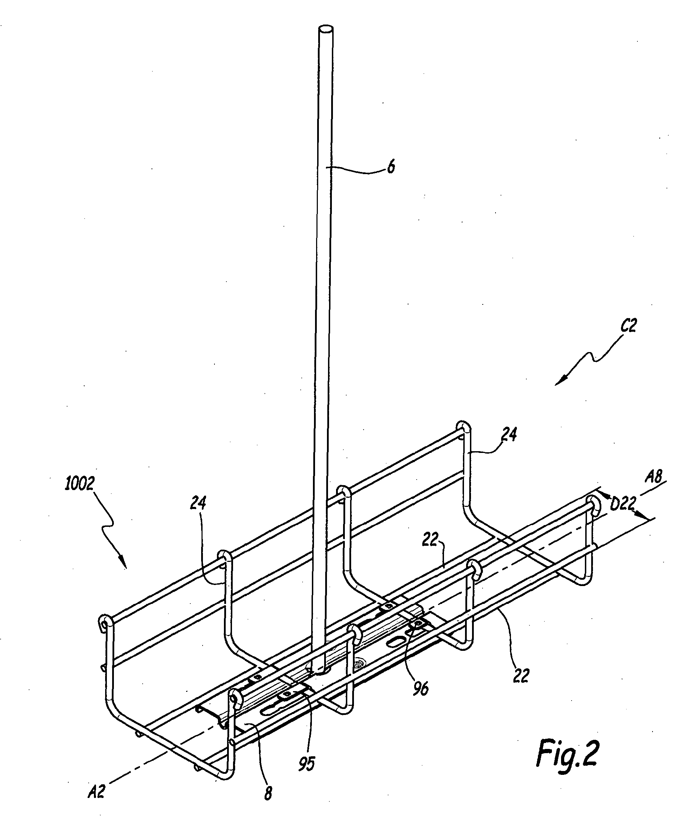

La figure 2 montre un chemin de câbles C2 qui comprend le système de suspension de la figure 1 et une deuxième goulotte 1002 qui diffère de la goulotte 2 en ce qu'elle comporte deux fils de chaine 22 formant le fond de la goulotte 1002.

Le système de suspension comprend la tige 6 et l'élément de fixation 8. Il est monté de manière similaire au montage de la figure 1, mais la tige 6 coopère avec le trou central 82. Dans la suite, on décrit uniquement ce qui différencie les chemins de câbles C1 et C2.

On note D22, une distance entre les deux fils de chaine 22 qui forment le fond de la goulotte 1002. La distance D22 est mesurée perpendiculairement à l'axe longitudinal A2 de la goulotte 1002.

La largeur L'8 de l'élément de fixation 8 est égale, voire légèrement inférieure, à la distance D22, de sorte que les deux fils de chaine 22 qui forment le fond de la goulotte 8 sont disposés de part et d'autre des parois latérales 8a et 8b de l'élément de fixation 8, ce qui permet aux fils de trame 24 de venir en appui contre la paroi dorsale 80 de l'élément de fixation 8, lorsque les fils de trame 24 sont logés dans les espaces E.

Ainsi, l'élément de fixation 8 est adapté pour suspendre des goulottes 1002 dont le fond comporte deux fils de chaine 22 ou, de manière analogue, un nombre de fils de chaine 22 supérieur à deux. La rigidité de l'assemblage entre la goulotte 1002 et l'élément de fixation 8 est satisfaisante.

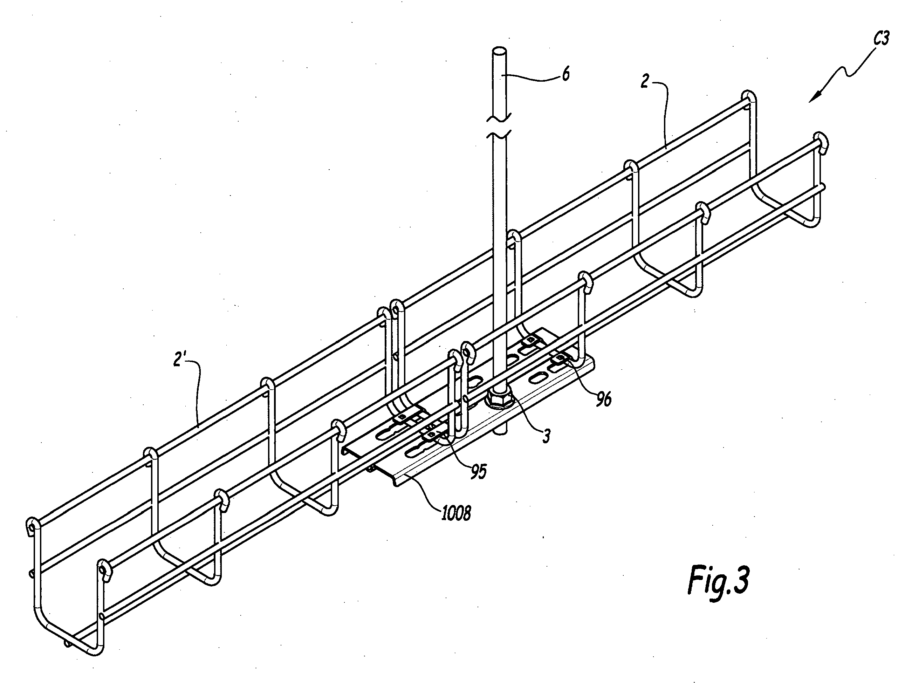

La figure 3 montre un chemin de câbles C3 qui comprend deux goulottes 2 et 2' similaires à la goulotte de la figure 1, ainsi qu'un système de suspension formé par la tige 6 et par un élément de fixation 1008, représenté à la figure 12, qui diffère de l'élément de fixation 8 en ce que les trous 82, 83a et 83b ne sont pas taraudés.

La tige 6 est insérée dans le deuxième trou 83a. Un écrou 3 et un contre écrou, non visible sur la figure 3, sont vissés de part et d'autre de la paroi dorsale 80 de l'élément de fixation 1008, de manière à solidariser la tige 6 avec l'élément de fixation 1008.

Les premières languettes 95 sont plus longues que les deuxièmes languettes 96 et assurent une fonction d'éclisse, c'est à dire qu'elles permettent l'assemblage des deux goulottes 2 et 2' bout à bout. Dans cette position, des extrémités de chaque goulotte 2 et 2' sont adjacentes et les fils de trame 24 formant ces extrémités sont retenus ensemble par les premières languettes 95 de l'élément de fixation 1008. Les deuxièmes languettes 96 retiennent un deuxième fil de trame 24 de la goulotte 2, de manière analogue au montage de la figure 1.

Optionnellement, un deuxième système de suspension, non représenté, est utilisé pour suspendre la goulotte 2' à un plafond.

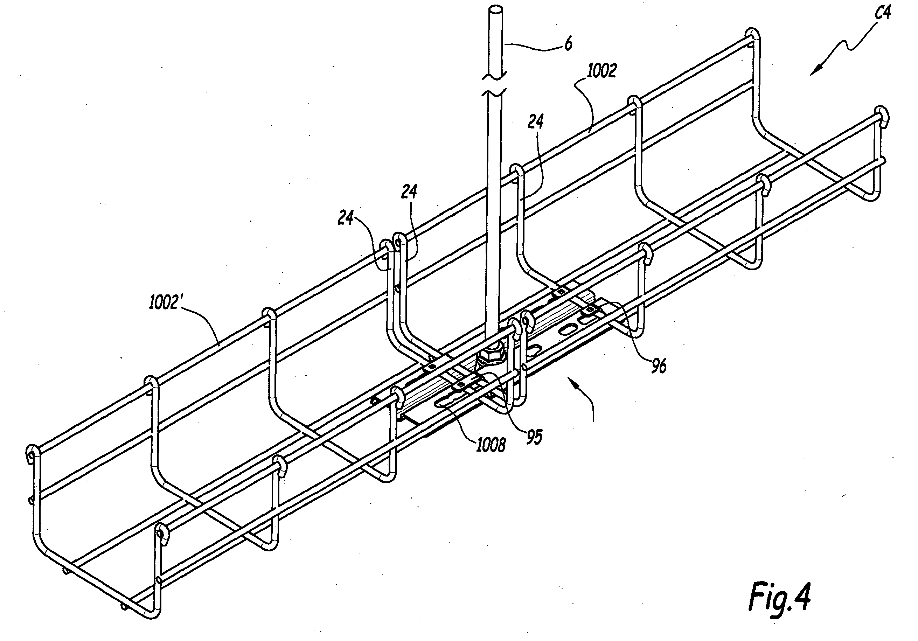

Dans l'exemple de la figure 4, un chemin de câbles C4 comprend un système de suspension similaire à celui de la figure 3, qui est utilisé pour suspendre une goulotte 1002 similaire à celle de la figure 2, c'est à dire une goulotte dont le fond est formé par deux fils de chaine 22.

L'élément de fixation 1008 réalise également une fonction d'éclisse, comme dans l'exemple de la figure 3, en retenant un fil de trame 24 d'une extrémité d'une goulotte 1002' similaire à la goulotte 1002.

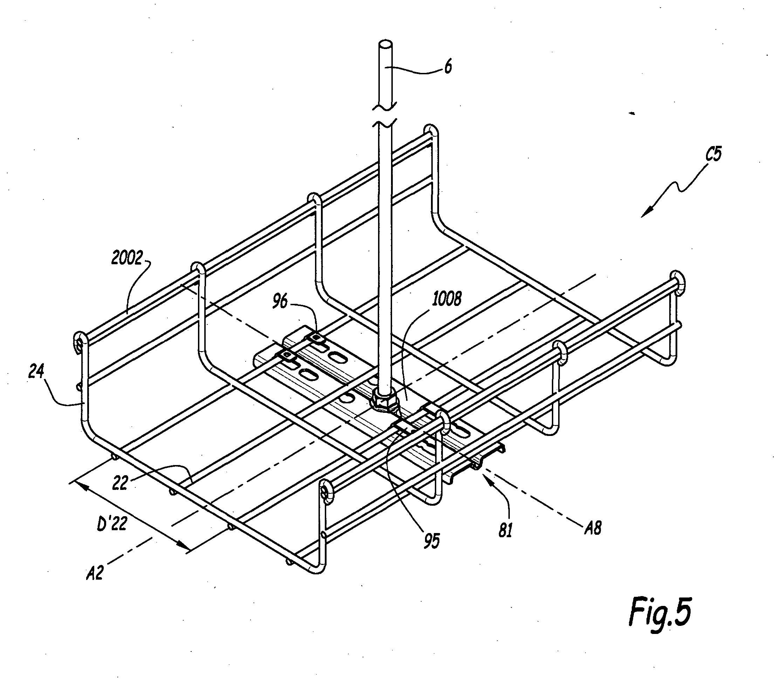

La figure 5 montre un chemin de câbles incluant un système de suspension comprenant la tige 6 et l'élément de fixation 1008. La tige 6 coopère avec le trou taraudé 82 de l'élément de fixation 1008.

Une goulotte 2002 dont le fond est formé par quatre fils de chaine 22 est suspendue à un plafond au moyen du système de suspension.

Le système de suspension est monté dans une deuxième configuration, dans laquelle l'axe longitudinal A8 de l'élément de fixation 1008 est perpendiculaire à l'axe longitudinal A2 de la goulotte 2002.

Deux fils de chaine 22 formant le fond de la goulotte 2002 et séparés entre eux par un troisième fil de chaine 22 sont retenus par les languettes 95 et 96. Les quatre fils de chaine 22 formant le fond de la goulotte 2002 sont en appui contre la paroi dorsale 80 de l'élément de fixation 1008.

La distance D9 entre les languettes 95 et 96 est sensiblement égale à une distance D'22 entre les fibres neutres de deux fils de chaine 22 de la goulotte 2002, séparés entre eux par un troisième fil de chaine 22.

De préférence, la distance D9 est comprise entre 50 et 100 mm, de préférence encore égale à 100.

L'élément de fixation 1008 est ainsi adapté pour suspendre à un plafond une goulotte 2002 dont le fond comporte trois fils de chaine 22 ou un nombre de fils de chaine 22 supérieur à trois.

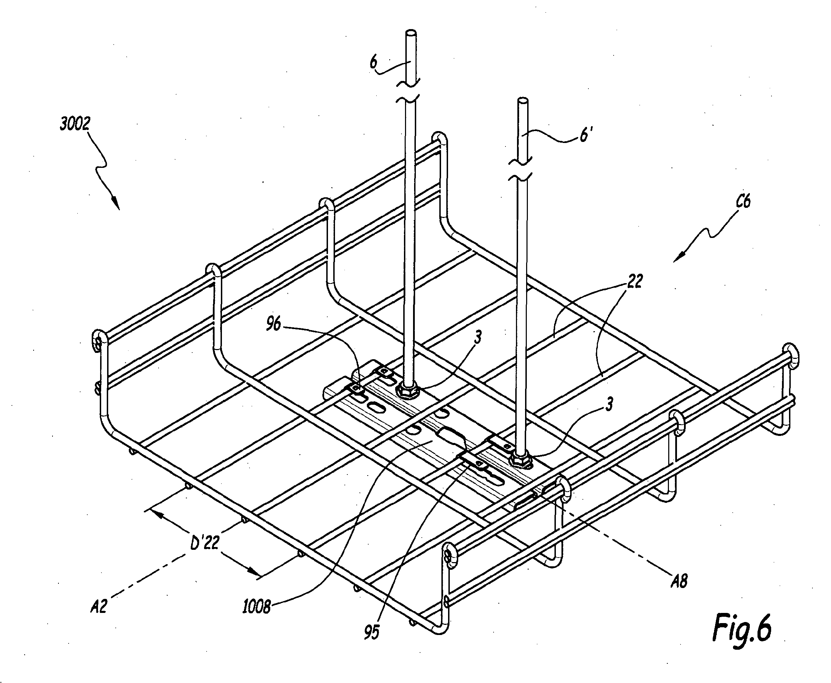

La figure 6 montre un chemin de câbles C incluant une goulotte 3002 dont le fond est constitué de six fils de chaine 22, suspendue à un plafond au moyen d'un système de fixation qui comprend l'élément de fixation 1008 et deux tiges filetées 6 et 6'.

La première tige 6 coopère avec un troisième trou 84b et la deuxième tige 6' coopère avec un quatrième trou 85b.

Le système de suspension est monté dans la deuxième configuration, avec les axes longitudinaux A2 et A8 perpendiculaires. Les premières languettes 95 retiennent un premier fil de chaine 22, et les deuxièmes languettes 96 retiennent un deuxième fil de chaine 22 séparé du premier fil de chaine 22 par un troisième fil de chaine 22.

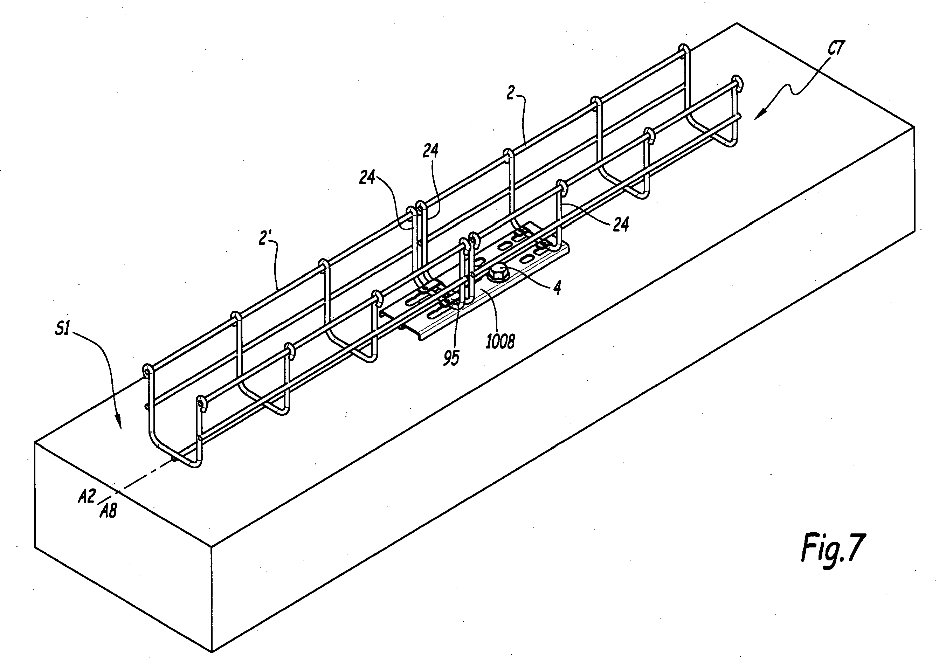

La figure 7 montre un chemin de câbles C7 comprenant deux goulottes 2 et 2' dont le fond est formé par un seul fil de chaine 22. L'élément de fixation 1008 est utilisé pour fixer les goulottes 2 et 2' sur une surface horizontale S1, par exemple sur le sol. L'élément de fixation 1008 est monté dans la première configuration, c'est à dire que les axes longitudinaux A2 et A8 sont parallèles.

L'élément de fixation 1008 est fixé sur la surface S1 au moyen d'une cheville 4 qui coopère avec le deuxième trou 83b. Deux fils de trame 24 consécutifs de la goulotte 2 sont retenus par les languettes 95 et 96. Un fil de trame 24 formant une extrémité de la goulotte 2' est retenu par les premières languettes 95, avec le fil de trame 24 d'extrémité de la goulotte 2.

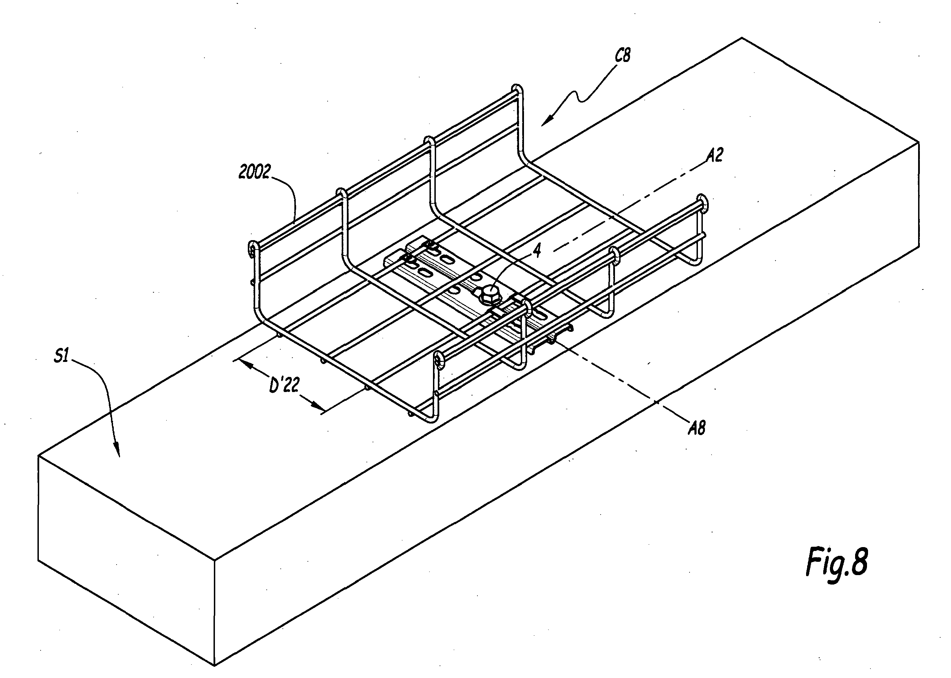

La figure 8 montre un chemin de câbles C8 comprenant la goulotte 2002, dont le fond est formé par quatre fils de chaine 22. L'élément de fixation 1008 est utilisé pour fixer la goulotte 2002 sur une surface horizontale S1, par exemple sur le sol. L'élément de fixation 1008 est monté dans la deuxième configuration, c'est à dire que les axes longitudinaux A2 et A8 sont perpendiculaires.

L'élément de fixation 1008 est fixé sur la surface S1 au moyen d'une cheville 4 qui coopère avec le trou central 82. Deux fils de chaine 22 de la goulotte 2002, séparés par un troisième fil de chaine 22, sont retenus par les languettes 95 et 96.

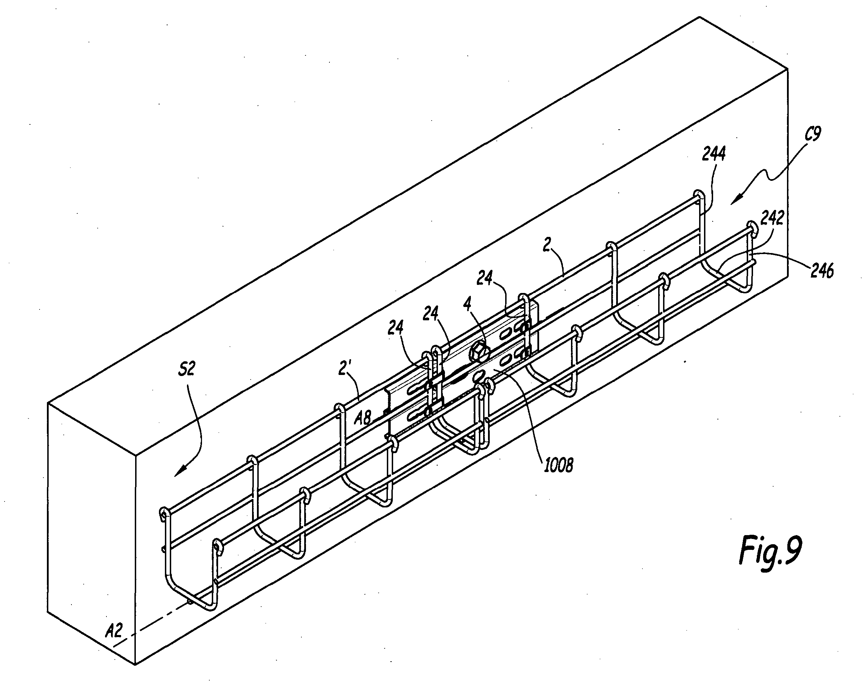

La figure 9 montre un chemin de câbles C9 comprenant deux goulottes 2 et 2' dont le fond est formé par un seul fil de chaine 22. L'élément de fixation 1008 est utilisé pour fixer les goulottes 2 et 2' sur une surface verticale S2, par exemple sur un mur. L'élément de fixation 1008 est monté dans la première configuration, c'est à dire que les axes longitudinaux A2 et A8 sont parallèles.

L'élément de fixation 1008 est fixé sur la surface S2 au moyen d'une cheville 4 qui coopère avec le deuxième trou 83b. Les parties latérales 244 de deux fils de trame 24 consécutifs de la goulotte 2 sont retenus par les languettes 95 et 96. La partie latérale 244 d'un fil de trame 24 formant une extrémité de la goulotte 2' est retenu par les premières languettes 95, avec le fil de trame 24 d'extrémité de la goulotte 2.

Ainsi, l'élément de fixation 1008 est adapté pour fixer une goulotte à une surface verticale S2 et assurer conjointement une fonction d'éclisse.

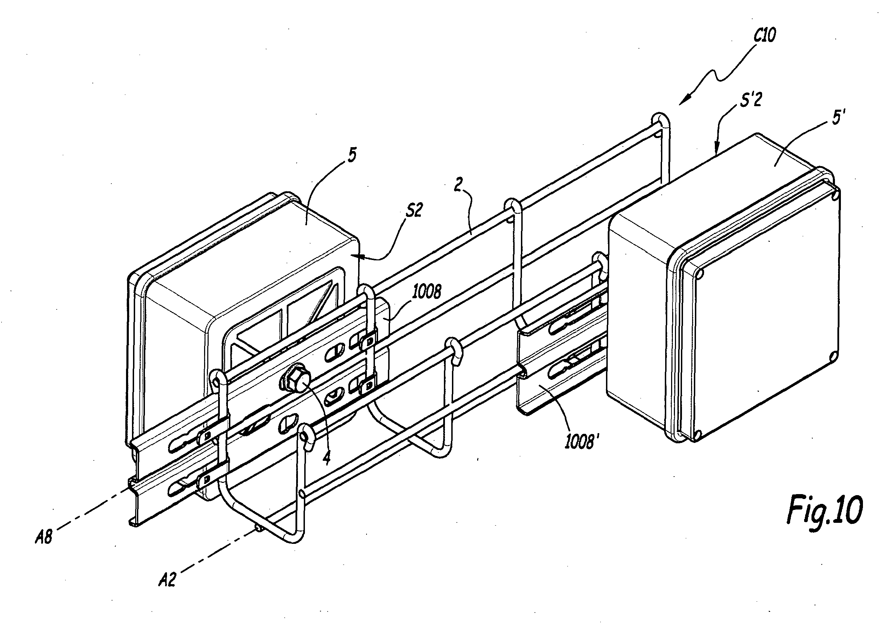

La figure 10 montre un chemin de câbles C10 comprenant une goulotte 2 dont le fond est formé par un seul fil de chaine 22. L'élément de fixation 1008 est utilisé pour fixer la goulotte 2 à un boitier 5 de dérivation électrique comportant une surface verticale S2. L'élément de fixation 1008 est monté dans la première configuration, c'est à dire que les axes longitudinaux A2 et A8 sont parallèles.

L'élément de fixation 1008 est fixé sur la surface S2 au moyen d'un boulon 4 qui coopère avec le deuxième trou 83b. Les parties latérales 244 de deux fils de trame 24 consécutifs de la goulotte 2 sont retenus par les languettes 95 et 96.

Un deuxième élément de fixation 1008' similaire à l'élément de fixation 1008 est utilisé pour fixer la goulotte 2 à un deuxième boitier de dérivation 5' comportant une surface verticale S'2. L'élément de fixation 1008' est monté dans la première configuration, c'est à dire que les axes longitudinaux A2 et A8 sont parallèles.

L'élément de fixation 1008' est fixé sur la surface S'2 du boitier de dérivation 5' de manière analogue au boitier de dérivation 5. Les parties latérales 246 de deux fils de trame 24 consécutifs de la goulotte 2 sont retenus par les languettes 95 et 96.

Ainsi, l'élément de fixation 1008 est adapté pour fixer une goulotte à un boitier de dérivation 5 ou 5'.

Dans le cadre de l'invention, les différents modes de réalisation décrits, ainsi que leurs variantes, peuvent être combinés entre eux.

L'invention n'est pas limitée aux modes de réalisation décrits en référence aux figures.

## Revendications

1. Chemin de câbles (C1-C10) comprenant au moins une goulotte (2 ; 1002 ; 2002 ; 3002) en treillis de fils soudés (22, 24) et au moins un élément de fixation (8 ; 1008, 1008') pour la goulotte (2 ; 1002; 2002 ; 3002), l'élément de fixation comportant une paroi (80) s'étendant le long d'un axe longitudinal (A8) et au moins un trou de fixation (82, 83a, 83b, 84a, 84b, 85a, 85b),
l'élément de fixation (8 ; 1008, 1008') comportant deux premières languettes (95) et deux deuxièmes languettes (96) qui font saillie à partir de la paroi (80) et qui délimitent chacune, avec la paroi (80), un espace (E) de réception d'un fil (22, 24) de la goulotte (2 ; 1002; 2002 ; 3002),
- les premières languettes (95) d'une part, et les deuxièmes languettes (96) d'autre part, étant alignées selon une direction perpendiculaire à l'axe longitudinal (A8), l'élément de fixation (8 ; 1008, 1008') comportant une rainure (81) , la rainure étant parallèle à l'axe longitudinal (A8) qui s'étend entre les premières languettes (95) d'une part, et entre les deuxièmes languettes (96) d'autre part, **caracterisé en ce que**:
- une longueur (L95) des premières languettes (95) est strictement supérieure à une longueur (L96) des deuxièmes languettes (96).
- la rainure (81) loge un unique fil de chaîne (22) formant le fond de la goulotte.

2. Chemin de câbles selon la revendication 1, **caractérisé en ce qu'**au moins un trou de fixation (82, 83a, 83b) est taraudé.

3. Chemin de câbles selon l'une des revendications précédentes, **caractérisé en ce que** les bords longitudinaux de l'élément de fixation sont recourbés en direction du fond de la rainure (81).

4. Chemin de câbles selon l'une des revendications précédentes, **caractérisé en ce qu'**il comporte plusieurs trous de fixation (82, 83a, 83b, 84a, 84b, 85a, 85b) répartis le long d'une direction parallèle à l'axe longitudinal (A8).

5. Chemin de câbles (C1-C10) selon l'une des revendications précédentes, **caractérisé en ce qu'**une distance (D9) mesurée parallèlement à l'axe longitudinal (A8), entre les premières languettes (95) d'une part, et les deuxièmes languettes (96) d'autre part, est sensiblement égale à une distance (D24) entre la fibre neutre de deux fils de trame (24) consécutifs de la goulotte (2 ; 1002 ; 2002 ; 3002).

6. Chemin de câbles (C1-C10) selon l'une des revendications précédentes, **caractérisé en ce qu'**une longueur (L95) des premières languettes (95) est strictement supérieure au double du diamètre des fils (22, 24) de la goulotte.

7. Chemin de câbles (C1-C10) selon l'une des revendications précédentes, **caractérisé en ce qu'**il comprend en outre une goulotte (1002 ; 2002 ; 3002) dont le fond est formé par au moins deux fils de chaîne (22) et **en ce qu'**une largeur (L'8) de l'élément de fixation, mesurée perpendiculairement à l'axe longitudinal (A8), est sensiblement égale à une distance (D22) entre deux fils de chaine (22) consécutifs de la goulotte (2 ; 1002 ; 2002 ; 3002).

8. Chemin de câbles (C1-C10) selon l'une des revendications précédentes, **caractérisé en ce qu'**il comprend en outre une goulotte (2002 ; 3002) dont le fond est formé par un nombre de fils de chaîne (22) supérieur à deux et **en ce qu'**une distance (D9) mesurée parallèlement à l'axe longitudinal (A8), entre les premières languettes (95) d'une part, et les deuxièmes languettes (96) d'autre part, est sensiblement égale à une distance (D'24) entre les fibres neutres de deux fils de chaine (22) de la goulotte (2002 ; 3002) séparés entre eux par un troisième fil de chaine (22).

9. Elément de fixation (8 ; 1008, 1008') pour une goulotte (2) de chemin de câbles en treillis de fils soudés (22, 24), l'élément de fixation comportant une paroi (80) s'étendant le long d'un axe longitudinal (A8) et au moins un trou de fixation (82, 83a, 83b, 84a, 84b, 85a, 85b),
l'élément de fixation (8 ; 1008, 1008') comportant deux premières languettes (95) et deux deuxièmes languettes (96) qui font saillie à partir de la paroi (80) et qui délimitent chacune, avec la paroi (80), un espace (E) de réception d'un fil (22, 24) de la goulotte (2 ; 1002; 2002 ; 3002),
les premières languettes (95) d'une part, et les deuxièmes languettes (96) d'autre part, étant alignées selon une direction perpendiculaires à l'axe longitudinal (A8),
l'élément de fixation (8 ; 1008, 1008') comportant une rainure (81), la rainure étant parallèle à l'axe longitudinal (A8) qui s'étend entre les premières languettes (95) d'une part, et entre les deuxièmes languettes (96) d'autre part, **caractérisé en ce que** :
- une longueur (L95) des premières languettes (95) est strictement supérieure à une longueur (L96) des deuxièmes languettes (96).
- la rainure (81) loge un unique fil de chaîne (22) formant le fond de la goulotte.

## Patentansprüche

1. Kabelkanal (C1-C10), der zumindest eine Rinne (2; 1002; 2002; 3002) aus geschweißtem Drahtgeflecht (22, 24) und zumindest ein Befestigungselement (8; 1008; 1008') für die Rinne (2; 1002; 2002; 3002) umfasst, wobei das Befestigungselement eine sich entlang einer Längsachse (A8) erstreckende Wand (80) und zumindest ein Befestigungsloch (82, 83a, 83b, 84a, 84b, 85a, 85b) aufweist, wobei das Befestigungselement (8; 1008; 1008') zwei erste Zungen (95) und zwei zweite Zungen (96), die von der Wand (80) hervorstehen und die jeweils mit der Wand (80) einen Aufnahmeraum (E) für einen Draht (22, 24) der Rinne (2; 1002; 2002; 3002) begrenzen, aufweist, wobei die ersten Zungen (95) einerseits und die zweiten Zungen (96) andererseits in einer Querrichtung zu der Längsachse (A8) ausgerichtet sind, wobei das Befestigungselement (8; 1008; 1008') eine Einkerbung (81) aufweist, wobei die Einkerbung parallel zur Längsachse (A8), die sich zwischen den ersten Zungen (95) einerseits und den zweiten Zungen (96) andererseits erstreckt, verläuft, **dadurch gekennzeichnet, dass**:
- eine Länge (L96) der ersten Zungen (95) in jedem Fall größer als eine Länge (L96) der zweiten Zungen (96) ist,
- die Einkerbung (81) einen einzigen Kettdraht (22), welcher den Boden der Rinne bildet, beherbergt.

2. Kabelkanal nach Anspruch 1, **dadurch gekennzeichnet, dass** zumindest ein Befestigungsloch (82, 83a, 83b) ein Gewinde aufweist.

3. Kabelkanal nach einem der vorangehenden Ansprüche, **dadurch gekennzeichnet, dass** die Längskanten des Befestigungselementes in Richtung des Bodens der Einkerbung (81) gekrümmt sind.

4. Kabelkanal nach einem der vorangehenden Ansprüche, **dadurch gekennzeichnet, dass** der Kabelkanal mehrere Befestigungslöcher (82, 83a, 83b, 84a, 84b, 85a, 85b) aufweist, welche entlang einer Richtung parallel zur Längsachse (A8) verteilt angeordnet sind.

5. Kabelkanal (C1-C10) nach einem der vorangehenden Ansprüche, **dadurch gekennzeichnet, dass** ein parallel zur Längsachse (A8) gemessener Abstand (D9) zwischen den ersten Zungen (95) einerseits und den zweiten Zungen (96) andererseits im Wesentlichen einem Abstand (D24) zwischen den Nullachsen von zwei aufeinanderfolgenden Schussdrähten der Rinne (2; 1002; 2002; 3002) entspricht.

6. Kabelkanal (C1-C10) nach einem der vorangehenden Ansprüche, **dadurch gekennzeichnet, dass** eine Länge (L95) der ersten Zungen (95) in jedem Fall größer als das Doppelte des Durchmessers der Drähte (22, 24) der Rinne ist.

7. Kabelkanal (C1-C10) nach einem der vorangehenden Ansprüche, **dadurch gekennzeichnet, dass** der Kabelkanal darüber hinaus eine Rinne (1002; 2002; 3002) umfasst, deren Boden durch zumindest zwei Kettdrähte (22) gebildet ist, und dass eine Breite (L'8) des Befestigungselementes, gemessen quer zur Längsachse (A8), im Wesentlichen einem Abstand (D22) zwischen zwei aufeinanderfolgenden Kettdrähten (22) der Rinne (2; 1002; 2002; 3002) entspricht.

8. Kabelkanal (C1-C10) nach einem der vorangehenden Ansprüche, **dadurch gekennzeichnet, dass** der Kabelkanal darüber hinaus eine Rinne (2002; 3002) umfasst, deren Boden durch mehr als zwei Kettdrähte (22) gebildet ist, und dass ein parallel zur Längsachse (A8) gemessener Abstand (D9) zwischen den ersten Zungen (95) einerseits und den zweiten Zungen (96) andererseits im Wesentlichen einem Abstand (D'24) zwischen den Nullachsen von zwei Kettdrähten (22) der Rinne (2002; 3002), welche durch einen dritten Kettdraht (22) voneinander getrennt sind, entspricht.

9. Befestigungselement (8; 1008; 1008') für eine Kabelkanalrinne (2) aus geschweißtem Drahtgeflecht (22, 24), wobei das Befestigungselement eine sich entlang einer Längsachse (A8) erstreckende Wand (80) und zumindest ein Befestigungsloch (82, 83a, 83b, 84a, 84b, 85a, 85b) aufweist, wobei das Befestigungselement (8; 1008; 1008') zwei erste Zungen (95) und zwei zweite Zungen (96), die von der Wand (80) hervorstehen und die jeweils mit der Wand (80) einen Aufnahmeraum (E) für einen Draht (22, 24) der Rinne (2; 1002; 2002; 3002) begrenzen, aufweist, wobei die ersten Zungen (95) einerseits und die zweiten Zungen (96) andererseits in einer Querrichtung zu der Längsachse (A8) ausgerichtet sind, wobei das Befestigungselement (8; 1008; 1008') eine Einkerbung (81) aufweist, wobei die Einkerbung parallel zur Längsachse (A8), die sich zwischen den ersten Zungen (95) einerseits und den zweiten Zungen (96) andererseits erstreckt, verläuft, **dadurch gekennzeichnet, dass**:
- eine Länge (L96) der ersten Zungen (95) in jedem Fall größer als eine Länge (L96) der zweiten Zungen (96) ist,
- die Einkerbung (81) einen einzigen Kettdraht (22), welcher den Boden der Rinne bildet, beherbergt.

## Claims

1. Cable route (C1-C10) comprising at least one tray (2; 1002; 2002; 3002) in the form of a lattice of welded wires (22, 24) and at least one element (8; 1008, 1008') for fixing the tray (2; 1002; 2002; 3002), the fixing element having a wall (80) extending along a longitudinal axis (A8) and at least one fixing hole (82, 83a, 83b, 84a, 84b, 85a, 85b),
the fixing element (8; 1008, 1008') having two first tongues (95) and two second tongues (96) which project out from the wall (80) and which each delimit, together with the wall (80), a space (E) for receiving a wire (22, 24) of the tray (2; 1002; 2002; 3002),
- the first tongues (95), for the first part, and the second tongues (96), for the second part, being aligned in a direction perpendicular to the longitudinal axis (A8),
- the fixing element (8; 1008, 1008') having a groove (81), the groove being parallel to the longitudinal axis (A8) which extends between the first tongues (95), for the first part, and between the second tongues (96), for the second part, **characterised in that**:
- a length (L95) of the first tongues (95) is strictly greater than a length (L96) of the second tongues (96)
- the groove (81) accommodates a single warp wire (22) forming the bottom of the tray.

2. Cable route according to claim 1, **characterised in that** at least one fixing hole (82, 83a, 83b) is threaded.

3. Cable route according to one of the preceding claims, **characterised in that** the longitudinal edges of the fixing element are folded over in the direction of the bottom of the groove (81).

4. Cable route according to one of the preceding claims, **characterised in that** it has a plurality of fixing holes (82, 83a, 83b, 84a, 84b, 85a, 85b) distributed along a direction parallel to the longitudinal axis (A8).

5. Cable route (C1-C10) according to one of the preceding claims, **characterised in that** a distance (D9), measured parallel to the longitudinal axis (A8), between the first tongues (95), for the first part, and the second tongues (96), for the second part, is substantially equal to a distance (D24) between the neutral axis of two consecutive weft wires (24) of the tray (2; 1002; 2002; 3002).

6. Cable route (C1-C10) according to one of the preceding claims, **characterised in that** a length (L95) of the first tongues (95) is strictly greater than twice the diameter of the wires (22, 24) of the tray.

7. Cable route (C1-C10) according to one of the preceding claims, **characterised in that** it further comprises a tray (1002; 2002; 3002) whose bottom is formed by at least two warp wires (22); and **in that** a width (L'8) of the fixing element, measured perpendicular to the longitudinal axis (A8), is substantially equal to a distance (D22) between two consecutive warp wires (22) of the tray (2; 1002; 2002; 3002).

8. Cable route (C1-C10) according to one of the preceding claims, **characterised in that** it further comprises a tray (2002; 3002) whose bottom is formed by a number of warp wires (22) which is greater than two; and **in that** a distance (D9), measured parallel to the longitudinal axis (A8), between the first tongues (95), for the first part, and the second tongues (96), for the second part, is substantially equal to a distance (D'24) between the neutral axes of two warp wires (22) of the tray (2002; 3002) separated from one another by a third warp wire (22).

9. Fixing element (8; 1008, 1008') for a cable route tray (2) in the form of a lattice of welded wires (22, 24), the fixing element having a wall (80) extending along a longitudinal axis (A8) and at least one fixing hole (82, 83a, 83b, 84a, 84b, 85a, 85b),
the fixing element (8; 1008, 1008') having two first tongues (95) and two second tongues (96) which project out from the wall (80) and which each delimit, together with the wall (80), a space (E) for receiving a wire (22, 24) of the tray (2; 1002; 2002; 3002),
the first tongues (95), for the first part, and the second tongues (96), for the second part, being aligned in a direction perpendicular to the longitudinal axis (A8),
the fixing element (8; 1008, 1008') having a groove (81), the groove being parallel to the longitudinal axis (A8) which extends between the first tongues (95), for the first part, and between the second tongues (96), for the second part, **characterised in that**:
- a length (L95) of the first tongues (95) is strictly greater than a length (L96) of the second tongues (96)
- the groove (81) accommodates a single warp wire (22) forming the bottom of the tray.
